# EUROPÄISCHE PATENTSCHRIFT

(11) **EP 4 508 960 B1**
(45) Veröffentlichungstag und Bekanntmachung des Hinweises auf die Patenterteilung: **02.09.2026**
(21) Anmeldenummer: 24182864.9
(22) Anmeldetag: 18.06.2024
(51) Int. Cl.: A01B 69/00, A01D 34/00

(54) **LANDWIRTSCHAFTLICHES FAHRZEUGGESPANN MIT DYNAMISCHER ARBEITSBREITENANPASSUNG**
AGRICULTURAL VEHICLE COMBINATION WITH DYNAMIC WORKING WIDTH ADAPTATION
ATTELAGE AGRICOLE DE VÉHICULE DOTÉ D'UN RÉGLAGE DYNAMIQUE DE LA LARGEUR DE TRAVAIL

(30) Priorität: 16.08.2023 DE 102023121923
(43) Veröffentlichungstag der Anmeldung: 19.02.2025
(73) Patentinhaber: CLAAS E-Systems GmbH, 49201 Dissen (DE)
(72) Erfinder: Hemsen, Moritz, 59872 Meschede (DE)
(74) Vertreter: CLAAS Gruppe

(56) Entgegenhaltungen:
- EP-B1- 1 364 573
- EP-B1- 3 384 755
- DE-A1- 102017 109 008
- US-A1- 2019 116 717
- US-A1- 2023 114 273

## Beschreibung

Die vorliegende Erfindung betrifft ein landwirtschaftliches Fahrzeuggespann zum landwirtschaftlichen Einsatz auf einem landwirtschaftlichen Feld. Dieses Fahrzeuggespann umfasst einen Traktor und wenigstens ein an diesem Traktor gekoppeltes Anbaugerät, dessen Arbeitsbreite einstellbar ist, wie z.B. aus der EP1364573B1 bekannt.

Die DE 10 2017 109 008 A1 offenbart ein Verfahren zum Steuern eines von einer Zugmaschine gezogenen landwirtschaftlichen Bodenbearbeitungsgeräts, insbesondere eines Pflugs, mit den Schritten: Erfassen von Informationen zu einer Kurvenfahrt der Zugmaschine und des landwirtschaftlichen Bodenbearbeitungsgeräts und selbsttätiges Anpassen der Geräteeinstellung des landwirtschaftlichen Bodenbearbeitungsgeräts in Abhängigkeit der Informationen zu der Kurvenfahrt der Zugmaschine und des landwirtschaftlichen Bodenbearbeitungsgeräts.

Der vorliegenden Erfindung liegt die Aufgabe zugrunde, eine verbesserte Ausführungsform eines landwirtschaftliches Fahrzeuggespanns anzugeben, bei dem die Kurvenfahrt der Zugmaschine optimiert wird.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, ungerade Abschnitte der Fahrspuren in Abhängigkeit einer automatischen Einstellung der Arbeitsbreite des Anbaugerätes derart anzupassen, dass das Anbaugerät während der Fahrt des Traktors entlang dieser angepassten ungeraden Abschnitte der Fahrspuren trotz der automatischen Einstellung der Arbeitsbreite das landwirtschaftliche Feld vollständig bearbeitet.

Das landwirtschaftliche Fahrzeuggespann ist für den landwirtschaftlichen Einsatz auf einem landwirtschaftlichen Feld ausgebildet. Dieses Fahrzeuggespann weist einen Traktor und wenigstens ein an diesem Traktor gekoppeltes, insbesondere lösbar und/oder schwenkbar gekoppeltes, Anbaugerät auf, dessen Arbeitsbreite einstellbar, insbesondere mechanisch und/oder hydraulisch und/oder elektronisch einstellbar, ist. Das Anbaugerät kann als Erntegutbearbeitungsgerät zur Bearbeitung von Erntegut des landwirtschaftlichen Feldes vorgesehen und ausgebildet sein.

Das landwirtschaftliche Fahrzeuggespann weist eine Einstellvorrichtung auf, die innerhalb des Traktors angeordnet ist. Die Einstellvorrichtung kann als Steuer- und/oder Regelvorrichtung ausgebildet sein, die eine Einstellung durch eine Steuerung und/oder Regelung bewirkt. Die Einstellvorrichtung kann eine Rechenvorrichtung und einen Datenspeicher aufweisen. Ferner kann die Einstellvorrichtung für einen Fahrer des landwirtschaftlichen Fahrzeuggespanns ein Display zur Einstellung der Einstellvorrichtung aufweisen.

Die Einstellvorrichtung ist dazu vorgesehen und eingerichtet, den Traktor in Abhängigkeit von satellitenbasierten Positionsinformationen derart einzustellen, dass der Traktor innerhalb des landwirtschaftlichen Feldes während des landwirtschaftlichen Einsatzes mehreren Fahrspuren entlangfährt. Mit anderen Worten ausgedrückt, fährt der Traktor zunächst entlang einer ersten Fahrspur und anschließend entlang einer zweiten Fahrspur, die zur ersten Fahrspur beabstandet ist. Diese Fahrspuren können mittels einer Vorgewendefahrspur in einem Vorgewendebereich des landwirtschaftlichen Feldes verbunden sein. Unter eingerichtet kann zu verstehen sein, dass die Einstellvorrichtung dazu ausgebildet und/oder programmiert ist.

Die Einstellvorrichtung, insbesondere die Rechenvorrichtung, kann datentechnisch kommunizierend mit dem Datenspeicher und/oder mit wenigstens einem Satelliten, insbesondere mehreren Satelliten, verbunden sein. Mittels einer datentechnischen kommunizierenden Verbindung mit wenigstens einem Satelliten, insbesondere mehreren Satelliten, können die satellitenbasierten Positionsinformationen, insbesondere bezüglich des Traktors, erfasst werden. Die Einstellvorrichtung kann eine Positionsbestimmungseinrichtung aufweisen, die zur Positionsbestimmung des Traktors mittels Satellitennavigationssignalen von Satelliten vorgesehen und eingerichtet ist. Eine datentechnische kommunizierende Verbindung kann kabelgebunden und/oder kabellos ausgebildet sein.

Das landwirtschaftliche Fahrzeuggespann ist dazu vorgesehen und eingerichtet, messtechnisch, insbesondere mittels einer Messvorrichtung, einen Fahrtrichtungswinkel zwischen dem Traktor und dem Anbaugerät zu erfassen und in Abhängigkeit dieses erfassten Fahrtrichtungswinkels die Arbeitsbreite des Anbaugerätes automatisch einzustellen. Unter eingerichtet kann stets zu verstehen sein, dass eine Einstellvorrichtung dazu ausgebildet und/oder programmiert ist. Der Fahrtrichtungswinkel kann der Winkel zwischen einer Längsachse des Anbaugerätes und der Fahrrichtung des Traktors sein. Bei einem Fahrtrichtungswinkel von 0°, sind die Längsachse des Anbaugerätes und die Fahrrichtung des Traktors parallel und übereinander liegend ausgerichtet.

Die Einstellvorrichtung ist zusätzlich dazu vorgesehen und eingerichtet, ungerade Abschnitte der Fahrspuren in Abhängigkeit der automatischen Einstellung der Arbeitsbreite des Anbaugerätes derart anzupassen, insbesondere vorausschauend anzupassen, dass das Anbaugerät während der Fahrt des Traktors entlang dieser angepassten ungeraden Abschnitte der Fahrspuren trotz der automatischen Einstellung der Arbeitsbreite das landwirtschaftlichen Feld, insbesondere das Erntegut des landwirtschaftlichen Feldes, vollständig bearbeitet. Ein ungerader Abschnitt einer Fahrspur kann ein gekrümmter Abschnitt der abzufahrenden Fahrspur, insbesondere mit einer Krümmung, sein. Hierdurch wird ein automatische Lenkung bei voller Arbeitsbreiten-Ausnutzung ermöglicht, ohne das Risiko von Überlappungen und/oder unbearbeiteten Teilflächen einzugehen.

Bei einer vorteilhaften Weiterbildung der erfindungsgemäßen Lösung ist vorgesehen, dass das Fahrzeuggespann eine Sensorvorrichtung zur messtechnischen Erfassung des Fahrtrichtungswinkels aufweist, und dass das Anbaugerät dazu vorgesehen und eingerichtet ist, in Abhängigkeit des erfassten Fahrtrichtungswinkels die Arbeitsbreite automatisch einzustellen. Hierfür kann das Anbaugerät eine eigene Einstellvorrichtung aufweisen. Diese Einstellvorrichtung des Anbaugerätes kann kommunizierend mit der Sensorvorrichtung und/oder kommunizierend mit der Einstellvorrichtung des Traktors verbunden sein. Die Sensorvorrichtung kann an einer Kopplung zwischen dem Traktor und dem Anbaugerät angeordnet sein.

Die Einstellvorrichtung des Anbaugerätes kann dazu vorgesehen und eingerichtet sein, dem Anbaugerät des Traktor einstellungstechnische Informationen bezüglich der automatisch einstellbaren Arbeitsbreiten des Anbaugerätes zu übermitteln. Die einstellungstechnischen Informationen können die minimale einstellbare Arbeitsbreite und/oder die maximale einstellbare Arbeitsbreite aufweisen. Zusätzlich oder alternativ können diese einstellungstechnischen Informationen einen Grenzwinkel umfassen, den der Absolutbetrag des Fahrtrichtungswinkel entsprechen und/oder überschreiten muss, damit eine automatische Anpassung der Arbeitsbreite erfolgt. Dieser Grenzwinkel kann gleich 0° oder ungleich 0° sein.

Die Einstellvorrichtung des Anbaugerätes kann dazu vorgesehen und eingerichtet sein, in Abhängigkeit des mittels der Sensorvorrichtung erfassten Fahrtrichtungswinkels die Arbeitsbreite des Anbaugerätes automatisch einzustellen, insbesondere mechanisch und/oder hydraulisch und/oder elektronisch einzustellen.

Bei einer vorteilhaften Weiterbildung der erfindungsgemäßen Lösung ist vorgesehen, dass die Einstellvorrichtung dazu vorgesehen und eingerichtet ist, die Fahrspuren derart anzupassen, dass gerade Abschnitte der Fahrspuren eine Beabstandung aufweisen, die größer ist als eine Beabstandung der ungeraden Abschnitte der Fahrspuren. Die Beabstandung der Fahrspuren kann sich auf die Beabstandung zweier unmittelbar benachbarter Fahrspuren beziehen. Diese Beabstandung kann senkrecht zur Richtung der Fahrspur ausgerichtet sein. Hierdurch wird eine optimale Kurvenfahrt und optimale Geradeausfährt ermöglicht.

Bei einer vorteilhaften Weiterbildung der erfindungsgemäßen Lösung ist vorgesehen, dass das landwirtschaftliche Fahrzeuggespann, insbesondere das Anbaugerät, dazu vorgesehen und eingerichtet ist, in Abhängigkeit des erfassten Fahrtrichtungswinkels die Arbeitsbreite des gekoppelten Anbaugeräts in ungeraden Abschnitten der Fahrspuren zu reduzieren. Die Fahrspuren sind in ungeraden Abschnitten, insbesondere bezüglich deren Beabstandung, dementsprechend angepasst.

Bei einer vorteilhaften Weiterbildung der erfindungsgemäßen Lösung ist vorgesehen, dass das landwirtschaftliche Fahrzeuggespann, insbesondere das Anbaugerät, dazu vorgesehen und eingerichtet ist, in Abhängigkeit des erfassten Fahrtrichtungswinkels die Arbeitsbreite des gekoppelten Anbaugerätes in geraden Abschnitten der Fahrspuren zu maximieren. Die Fahrspuren sind in geraden Abschnitten, insbesondere bezüglich deren Beabstandung, dementsprechend angepasst.

Bei einer vorteilhaften Weiterbildung der erfindungsgemäßen Lösung ist vorgesehen, dass das Anbaugerät mehrere Anbaugeräteteile aufweist, wobei wenigstens ein Anbaugeräteteil mittels einem Aktuator an einem Anbaugerätgestellt des Anbaugerätes zur Einstellung der Arbeitsbreite verschiebbar angeordnet ist. Der Aktuator kann ein mechanischer und/oder hydraulischer und/oder pneumatischer und/oder elektronischer Aktuator sein.

Bei einer vorteilhaften Weiterbildung der erfindungsgemäßen Lösung ist vorgesehen, dass das Anbaugerät mehrere Anbaugeräteteile aufweist, wobei für die Einstellung der Arbeitsbreite des Anbaugerätes während der Fahrt entlang des ungeraden Abschnittes der Fahrspur lediglich ein Anbaugeräteteil, insbesondere nicht mehrere Anbaugeräteteile, des Anbaugerätes verschoben wird. Der Aktuator kann ein mechanischer und/oder hydraulischer und/oder pneumatischer und/oder elektronischer Aktuator sein.

Bei einer vorteilhaften Weiterbildung der erfindungsgemäßen Lösung ist vorgesehen, dass mehrere Anbaugeräte am Traktor gekoppelt sind. Das landwirtschaftliche Fahrzeuggespann kann dazu vorgesehen und eingerichtet sein, messtechnisch, insbesondere mittels einer Messvorrichtung, einen Fahrtrichtungswinkel zwischen dem Traktor und dem jeweiligen Anbaugerät, insbesondere allen Anbaugeräten, zu erfassen und in Abhängigkeit der erfassten Fahrtrichtungswinkel die Arbeitsbreite eines Anbaugerätes und/oder mehrerer, insbesondere aller, Anbaugeräte automatisch einzustellen.

Bei einer vorteilhaften Weiterbildung der erfindungsgemäßen Lösung ist vorgesehen, dass dass das Anbaugerät als frontseitiges Anbaugerät ausgebildet ist, und/oder dass das Anbaugerät als heckseitiges Anbaugerät ausgebildet ist.

Bei einer vorteilhaften Weiterbildung der erfindungsgemäßen Lösung ist vorgesehen, dass das Anbaugerät als Schwadvorrichtung ausgebildet ist, und/oder dass das Anbaugerät als Mähwerkvorrichtung ausgebildet ist. Die Schwadvorrichtung kann mehrere Anbaugeräteteile aufweisen, wobei diese Anbaugeräteteile Kreiseleinheiten der Schwadvorrichtung ausbilden. Die Mähwerkvorrichtung kann mehrere Anbaugeräteteile aufweisen, wobei diese Anbaugeräteteile Mähwerkeinheiten der Schwadvorrichtung ausbilden.

Bei einer vorteilhaften Weiterbildung der erfindungsgemäßen Lösung ist vorgesehen, dass die Einstellvorrichtung dazu vorgesehen und eingerichtet ist, bei der Anpassung der ungeraden Abschnitte der Fahrspuren zusätzlich messtechnisch, insbesondere satellitentechnisch, erfasste Feldgrenzen des landwirtschaftlichen Feld einzubeziehen.

Bei einer vorteilhaften Weiterbildung der erfindungsgemäßen Lösung ist vorgesehen, dass die Einstellvorrichtung dazu vorgesehen und eingerichtet ist, bei der Anpassung der ungeraden Abschnitte der Fahrspuren zusätzlich eine messtechnisch, insbesondere satellitentechnisch, erfasste Konturspur von einem Starpunkt bis zu einem Endpunkt des landwirtschaftlichen Feldes einzubeziehen.

Bei einer vorteilhaften Weiterbildung der erfindungsgemäßen Lösung ist vorgesehen, dass die Einstellvorrichtung dazu vorgesehen und eingerichtet ist, die Anpassung der ungeraden Abschnitte der Fahrspuren zeitlich vorschauend vorzunehmen. Die Einstellvorrichtung kann dazu vorgesehen und eingerichtet sein, die Anpassung der ungeraden Abschnitte der Fahrspuren vollständig vorzunehmen, bevor das landwirtschaftliche Fahrzeuggespann den landwirtschaftlichen Einsatz auf einem landwirtschaftlichen Feld beginnt.

Ferner betrifft die Erfindung die einstellungstechnische Verwendung von in einem computerlesbaren Datenspeicher hinterlegten Informationen bezüglich automatisch einstellbaren Arbeitsbreiten eines Anbaugerätes, um für einen Traktor, insbesondere für einen Traktor des erfindungsgemäßen landwirtschaftlichen Fahrzeuggespanns, der entlang ungerader Abschnitte von Fahrspuren fahren wird, zeitlich vorschauend diese ungeraden Abschnitte derart anzupassen, dass das landwirtschaftliche Feld vollständig bearbeitet wird. Hierbei kann das erfindungsgemäße landwirtschaftliche Fahrzeuggespann, insbesondere der Traktor und/oder das Anbaugerät, die zuvor als auch nachfolgend beschriebenen Merkmale aufweisen.

Bei einer vorteilhaften Weiterbildung der erfindungsgemäßen Lösung ist vorgesehen, dass diese Informationen messtechnische erfasste und einstellungstechnisch relevante Informationen für eine Einstellvorrichtung des Traktors ausbilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein erfindungsgemäßes landwirtschaftliches Fahrzeuggespann zum Schwaden von abgemähten Futtererntegut während einer Geradeausfahrt, und
- Fig. 2: das erfindungsgemäße landwirtschaftliche Fahrzeuggespann zum Schwaden von abgemähten Futtererntegut während einer Fahrt entlang eines ungeraden Abschnittes, und
- Fig. 3: u.a. eine schematische Darstellung vorausschauend geplanter gerader und ungerader Fahrspuren bezüglich eines landwirtschaftlichen Feldes.

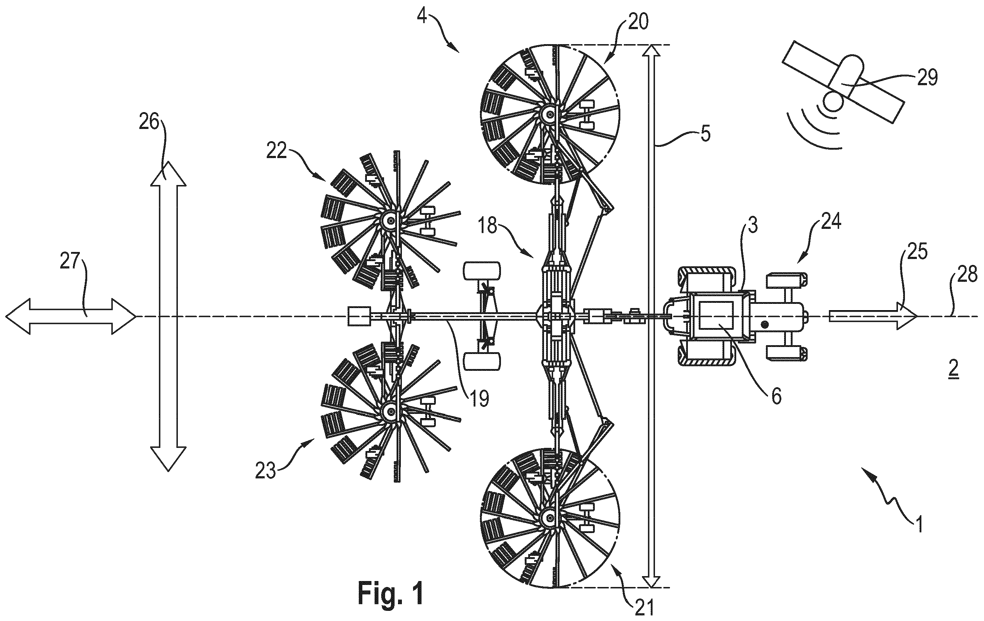

Die Fig. 1 zeigt ein landwirtschaftliches Fahrzeuggespann 1 mit einem Traktor 3 und einem am Traktor 3 gekoppelten, insbesondere lösbar gekoppelten, Anbaugerät 4 während des Einsatzes auf einem landwirtschaftlichen Feld 2.

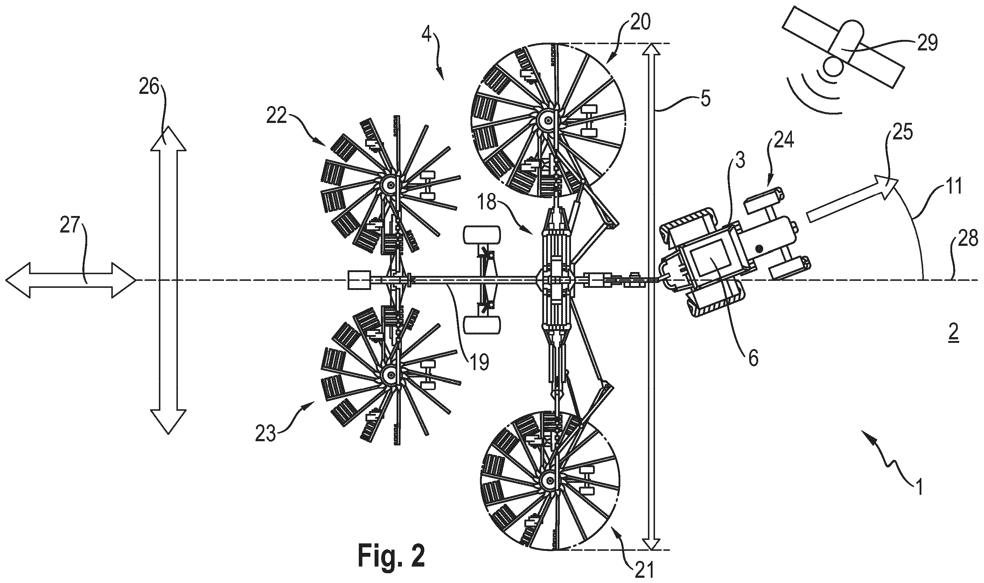

In der Fig. 1 und Fig. 2 ist ledig ein Anbaugeräte 4 am Traktor 3 gekoppelt, welches ein heckseitiges Anbaugerät 4 ausbildet. Alternativ oder zusätzlich können mehrere Anbaugeräte 4 am Traktor 3 gekoppelt sein. Hierbei kann eines der Anbaugeräte 4 als heckseitiges Anbaugerät 4 und/oder frontseitiges Anbaugerät 4 ausgebildet sein.

Das Anbaugerät 4 ist in den Fig. 1 und Fig. 2 beispielhaft als heckseitiger Vierkreiselschwader zum Schwaden von abgemähten Futtererntegut, welches nicht dargestellt ist, ausgebildet. Alternativ oder zusätzlich kann das Anbaugerät 4 als Mähwerkvorrichtung zum Mähen von ungemähtem Futtererntegut ausgebildet sein.

Das Anbaugerät 4 weist mehrere Anbaugeräteteile 20, 21, 22, 23 auf, wobei wenigstens ein Anbaugeräteteil 20 mittels einem Aktuator 18 an einem Anbaugerätgestellt 19 des Anbaugerätes 4 zur Einstellung einer Arbeitsbreite 5 des Anbaugerätes 4 verschiebbar angeordnet ist. Das Anbaugerätgestellt 19 kann eine Schwerpunktlängsachse 28 aufweisen, die parallel zu einer Längsachse 27 und quer zu einer Querachse 26 angeordnet ist. Die Querachse 26 ist quer und/oder senkrecht zur Längsachse 27 ausgerichtet. Die Arbeitsbreite 5 ist parallel zur Querachse 26 ausgerichtet. Unter einem verschiebbar angeordneten Anbaugeräteteil 20 kann zu verstehen sein, dass das Anbaugeräteteil 20 mittels des Aktuators 18, insbesondere entlang der Querachse 26, relativ zum Anbaugerätgestellt 19 verschoben bzw. positioniert werden kann. Es kann vorgesehen sein, dass das Anbaugerät 4 mehrere verschiebbare Anbaugeräteteile 20, 21, 22, 23 aufweist. Beispielsweise können die mittleren Anbaugeräteteile 20, 21 verschiebbar angeordnet sein, während die hinteren Anbaugeräteteile 22, 23 nicht verschiebbar angeordnet.

Der Traktor 3 weist eine Lenkvorrichtung 24 zur Einstellung einer Fahrrichtung 25 des Traktors 3 auf. In der Fig. 1 befindet sich das landwirtschaftliche Fahrzeuggespann 1 in einer Geradeausfahrt, während dieses Fahrzeuggespann 1 in der Fig. 2 während einer Kurvenfahrt dargestellt ist. Bei der Geradeausfahrt der Fig. 1 sind die Schwerpunklängsachse 28 und die Fahrtrichtung 25 im Wesentlichen parallel und übereinander liegend ausgerichtet. Während der Kurvenfahrt der Fig. 2 sind die Schwerpunklängsachse 28 und die Fahrtrichtung 25 gewinkelt mit einem Winkel ungleich 0° angeordnet.

Das landwirtschaftliche Fahrzeuggespann 1 ist dazu vorgesehen und eingerichtet, messtechnisch einen Fahrtrichtungswinkel 11, der in der Fig. 2 angedeutet ist, zwischen dem Traktor 3 und dem schwenkbar gekoppelten Anbaugerät 4 zu erfassen und in Abhängigkeit dieses erfassten Fahrtrichtungswinkels 11 die Arbeitsbreite 5 des Anbaugerätes 4 automatisch einzustellen. Der Fahrtrichtungswinkel 11 kann sich auf den Winkel, insbesondere den kleinesten Winkel, zwischen der Fahrtrichtung 25 des Traktors und der Schwerpunktlängsachse 28 des Anbaugerätes 4 beziehen.

Das landwirtschaftliche Fahrzeuggespann 1 weist eine dynamische Arbeitsbreitenanpassung auf, die dazu vorgesehen und eingerichtet ist, messtechnisch den Fahrtrichtungswinkel 11 zwischen dem Traktor 3 und dem Anbaugerät 4 zu erfassen und in Abhängigkeit dieses erfassten Fahrtrichtungswinkels 11 die Arbeitsbreite 5 des Anbaugerätes 4 automatisch einzustellen.

In der Fig. 1 wird die Arbeitsbreite 5 des gekoppelten Anbaugerätes 4 maximiert, weil sich das landwirtschaftliche Fahrzeuggespann 1 in einer Geradeausfahrt befindet, wohingegen diese Arbeitsbreite 5 während der Kurvenfahrt in der Fig. 2 aktiv reduziert wird. Das Fahrzeuggespann 1 kann eine nicht dargestellte Sensorvorrichtung zur messtechnischen Erfassung des Fahrtrichtungswinkels 11 aufweisen und das Anbaugerät 4 kann dazu vorgesehen und eingerichtet sein, in Abhängigkeit dieses erfassten Fahrtrichtungswinkels 11 die Arbeitsbreite 5 automatisch einzustellen.

Das landwirtschaftliche Fahrzeuggespann 1 weist eine Einstellvorrichtung 6 auf, die innerhalb des Traktors 3 angeordnet ist. Diese Einstellvorrichtung 6 kann als Steuer- und/oder Regelvorrichtung ausgebildet sein, die eine Einstellung durch eine Steuerung und/oder Regelung bewirkt.

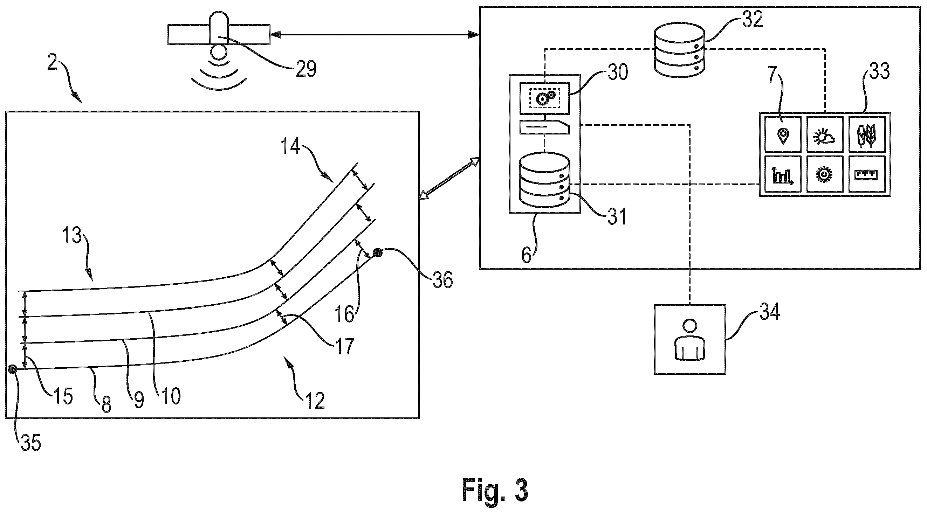

Gemäß der Fig. 3 kann diese Einstellvorrichtung 6 eine Rechenvorrichtung 30 und einen internen Datenspeicher 31 innerhalb des Traktors 3 und/oder einen externen Datenspeicher 32 außerhalb des Traktors 3 aufweisen. Ferner kann die Einstellvorrichtung 9 für einen Fahrer 34 des landwirtschaftlichen Fahrzeuggespanns 1 ein nicht dargestelltes Display zur Einstellung der Einstellvorrichtung 6 aufweisen. Der Datenspeicher 31 und/oder 32 kann satellitenbasierte Positionsinformationen 7, Wetterinformationen, Erntegutinformationen, Feldinformationen, einstellungstechnische Informationen bezüglich des Traktors 6 und/oder einstellungstechnische Informationen bezüglich der automatisch einstellbaren Arbeitsbreiten des Anbaugerätes 4 umfassen.

Die Einstellvorrichtung 6 ist dazu vorgesehen und eingerichtet, den Traktor 3 in Abhängigkeit der satellitenbasierten Positionsinformationen 7 von wenigstens einem Satelliten 29 derart einzustellen, dass der Traktor 3 innerhalb des landwirtschaftlichen Feldes 2 während des landwirtschaftlichen Einsatzes mehreren Fahrspuren 8, 9, 10 entlangfährt. Mit anderen Worten ausgedrückt, fährt der Traktor 3 zunächst entlang einer ersten Fahrspur 8 und anschließend entlang einer zweiten Fahrspur 9, die zur ersten Fahrspur 8 beabstandet ist. Diese Fahrspuren 8 und 9 können mittels einer nicht dargestellten Vorgewendefahrspur in einem nicht dargestellten Vorgewendebereich des landwirtschaftlichen Feldes 2 verbunden sein. Analoges gilt für die Fahrspuren 9 und 10.

Die Einstellvorrichtung 6 ist dazu vorgesehen und eingerichtet, ungerade Abschnitte 12 der Fahrspuren 8, 9, 10 in Abhängigkeit der automatischen Einstellung der Arbeitsbreite 5 des Anbaugerätes 4 derart anzupassen, dass das Anbaugerät 4 während der Fahrt des Traktors 3 entlang dieser angepassten ungeraden Abschnitte 12 der Fahrspuren 8, 9, 10 trotz der automatischen Einstellung der Arbeitsbreite 5 das landwirtschaftliche Feld 2 vollständig bearbeitet.

Hierbei werden die Fahrspuren 8, 9, 10 durch die Einstellvorrichtung 6 derart angepasst, dass gerade Abschnitte 13, 14 der Fahrspuren 8, 9, 10 eine Beabstandung 15, 16 aufweisen, die größer ist als eine Beabstandung 17 der ungeraden Abschnitte 12 der Fahrspuren 8, 9, 10. Hierdurch wird eine optimale Kurvenfahrt und optimale Geradeausfährt ermöglicht.

Die Beabstandung der Fahrspuren 8, 9, 10 kann sich auf die Beabstandung 15, 16, 17 zweier unmittelbar benachbarter Fahrspuren 8, 9, 10 beziehen. Diese Beabstandung 15, 16, 17 kann punktuell betrachtet senkrecht zur Richtung der Fahrspur 8, 9, 10 ausgerichtet sein.

Die Einstellvorrichtung 6 kann dazu vorgesehen und eingerichtet sein, bei der Anpassung der ungeraden Abschnitte 12 der Fahrspuren 8, 9, 10 zusätzlich messtechnisch erfasste Feldgrenzen des landwirtschaftlichen Feld 2 einzubeziehen.

Alternativ oder zusätzlich kann die Einstellvorrichtung 6 dazu vorgesehen und eingerichtet sein, bei der Anpassung der ungeraden Abschnitte 12 der Fahrspuren 8, 9, 10 zusätzlich eine messtechnisch erfasste Konturspur von einem Starpunkt 35 bis zu einem Endpunkt 36 des landwirtschaftlichen Feldes 2 einzubeziehen.

Die Anpassung der ungeraden Abschnitte 12 der Fahrspuren 8, 9, 10 kann mittels der Einstellvorrichtung 6 zeitlich vorschauend vorgenommen werden, sodass die Anpassung der ungeraden Abschnitte 12 der Fahrspuren 8, 9, 10 vollständig vorgenommen wird, bevor das landwirtschaftliche Fahrzeuggespann 1 den landwirtschaftlichen Einsatz auf einem landwirtschaftlichen Feld 2 beginnt.

Hierbei wird eine einstellungstechnische Verwendung von in einem computerlesbaren Datenspeicher 31 und/oder 32 hinterlegten Informationen bezüglich automatisch einstellbaren Arbeitsbreiten des Anbaugerätes 4 eingesetzt, um für den Traktor 3, der entlang der ungeraden Abschnitte 12 der Fahrspuren 8, 9, 10 fahren wird, zeitlich vorschauend diese ungeraden Abschnitte 12 derart angepasst werden, dass das landwirtschaftliche Feld 2 trotz der automatischen Einstellung der Arbeitsbreite 5 vollständig bearbeitet wird.

### Bezugszeichenliste

| | | | |
|---|---|---|---|
| 1 | landwirtschaftliches Fahrzeuggespann | 33 | Datensatz |
| 2 | landwirtschaftlichen Feld | 34 | Fahrer |
| 3 | Traktor | 35 | Startpunkt |
| 4 | Anbaugerät | 36 | Endpunkt |
| 5 | Arbeitsbreite | | |
| 6 | Einstellvorrichtung | | |
| 7 | satellitenbasierte Positionsinformationen | | |
| 8 | Fahrspur | | |
| 9 | Fahrspur | | |
| 10 | Fahrspur | | |
| 11 | Fahrtrichtungswinkel | | |
| 12 | ungerade Abschnitte | | |
| 13 | gerade Abschnitte | | |
| 14 | gerade Abschnitte | | |
| 15 | Beabstandung | | |
| 16 | Beabstandung | | |
| 17 | Beabstandung | | |
| 18 | Aktuator | | |
| 19 | Anbaugerätgestell | | |
| 20 | erstes Anbaugeräteteil | | |
| 21 | zweites Anbaugeräteteil | | |
| 22 | drittes Anbaugeräteteil | | |
| 23 | viertes Anbaugeräteteil | | |
| 24 | Lenkvorrichtung | | |
| 25 | Fahrtrichtung | | |
| 26 | Querachse | | |
| 27 | Längsachse | | |
| 28 | Schwerpunktlängsachse des Anbaugerätgestells | | |
| 29 | Satellit | | |
| 30 | Rechenvorrichtung | | |
| 31 | Datenspeicher | | |
| 32 | externer Datenspeicher | | |

## Patentansprüche

1. Landwirtschaftliches Fahrzeuggespann (1) zum landwirtschaftlichen Einsatz auf einem landwirtschaftlichen Feld (2),
- mit einem Traktor (3) und wenigstens einem an diesem Traktor (3) gekoppelten Anbaugerät (4), dessen Arbeitsbreite (5) einstellbar ist,
- mit einer Einstellvorrichtung (6) im Traktor (3), wobei das landwirtschaftliche Fahrzeuggespann (1) dazu vorgesehen und eingerichtet ist, messtechnisch einen Fahrtrichtungswinkel (11) zwischen dem Traktor (3) und dem Anbaugerät (4) zu erfassen und in Abhängigkeit dieses erfassten Fahrtrichtungswinkels (11) die Arbeitsbreite (5) des Anbaugerätes (4) automatisch einzustellen,
**dadurch gekennzeichnet,**
- **dass** die Einstellvorrichtung (6) dazu vorgesehen und eingerichtet ist, den Traktor (3) in Abhängigkeit von satellitenbasierten Positionsinformationen (7) derart einzustellen, dass der Traktor (3) innerhalb des landwirtschaftlichen Feldes (2) während des landwirtschaftlichen Einsatzes mehreren Fahrspuren (8, 9, 10) entlangfährt,
- wobei die Einstellvorrichtung (6) dazu vorgesehen und eingerichtet ist, ungerade Abschnitte (12) der Fahrspuren (8, 9, 10) in Abhängigkeit der automatischen Einstellung der Arbeitsbreite (5) des Anbaugerätes (4) derart anzupassen, dass das Anbaugerät (4) während der Fahrt des Traktors (3) entlang dieser angepassten ungeraden Abschnitte (12) der Fahrspuren (8, 9, 10) trotz der automatischen Einstellung der Arbeitsbreite (5) das landwirtschaftliche Feld (2) vollständig bearbeitet.

2. Landwirtschaftliches Fahrzeuggespann nach Anspruch 1,
**dadurch gekennzeichnet,**
- **dass** das Fahrzeuggespann (1) eine Sensorvorrichtung zur messtechnischen Erfassung des Fahrtrichtungswinkels (11) aufweist, und
- **dass** das Anbaugerät (4) dazu vorgesehen und eingerichtet ist, in Abhängigkeit des erfassten Fahrtrichtungswinkels (11) die Arbeitsbreite (5) automatisch einzustellen.

3. Landwirtschaftliches Fahrzeuggespann nach einem der vorhergehenden Ansprüche,
**dadurch gekennzeichnet,**
**dass** die Einstellvorrichtung (6) dazu vorgesehen und eingerichtet ist, die Fahrspuren (8, 9, 10) derart anzupassen, dass gerade Abschnitte (13, 14) der Fahrspuren (8, 9, 10) eine Beabstandung (15, 16) aufweisen, die größer ist als eine Beabstandung (17) der ungeraden Abschnitte (12) der Fahrspuren (8, 9, 10).

4. Landwirtschaftliches Fahrzeuggespann nach einem der vorhergehenden Ansprüche,
**dadurch gekennzeichnet,**
**dass** das landwirtschaftliche Fahrzeuggespann (1) dazu vorgesehen und eingerichtet ist, in Abhängigkeit des erfassten Fahrtrichtungswinkels (11) die Arbeitsbreite (5) des gekoppelten Anbaugerätes (4) in ungeraden Abschnitten (12) der Fahrspuren (8, 9, 10) zu reduzieren.

5. Landwirtschaftliches Fahrzeuggespann nach einem der vorhergehenden Ansprüche,
**dadurch gekennzeichnet,**
**dass** das landwirtschaftliche Fahrzeuggespann (1) dazu vorgesehen und eingerichtet ist, in Abhängigkeit des erfassten Fahrtrichtungswinkels (11) die Arbeitsbreite (5) des gekoppelten Anbaugerätes (4) in geraden Abschnitten (13, 14) der Fahrspuren (8, 9, 10) zu maximieren.

6. Landwirtschaftliches Fahrzeuggespann nach einem der vorhergehenden Ansprüche,
**dadurch gekennzeichnet,**
- **dass** das Anbaugerät (4) mehrere Anbaugeräteteile (20, 21, 22, 23) aufweist,
- wobei wenigstens ein Anbaugeräteteil (20) mittels einem Aktuator (18) an einem Anbaugerätgestellt (19) des Anbaugerätes (4) zur Einstellung der Arbeitsbreite (5) verschiebbar angeordnet ist.

7. Landwirtschaftliches Fahrzeuggespann nach einem der vorhergehenden Ansprüche,
**dadurch gekennzeichnet,**
- **dass** das Anbaugerät (4) mehrere Anbaugeräteteile (20, 21, 22, 23) aufweist,
- wobei für die Einstellung der Arbeitsbreite (5) des Anbaugerätes (4) während der Fahrt entlang des ungeraden Abschnittes (12) der Fahrspur (8, 9, 10) lediglich ein Anbaugeräteteil (20) des Anbaugerätes (4) verschoben wird.

8. Landwirtschaftliches Fahrzeuggespann nach einem der vorhergehenden Ansprüche,
**dadurch gekennzeichnet,**
**dass** mehrere Anbaugeräte (4) am Traktor (3) gekoppelt sind.

9. Landwirtschaftliches Fahrzeuggespann nach einem der vorhergehenden Ansprüche, **dadurch gekennzeichnet,**
- **dass** das Anbaugerät (4) als frontseitiges Anbaugerät (4) ausgebildet ist, und/oder
- **dass** das Anbaugerät (4) als heckseitiges Anbaugerät (4) ausgebildet ist.

10. Landwirtschaftliches Fahrzeuggespann nach einem der vorhergehenden Ansprüche,
**dadurch gekennzeichnet,**
**dass** das Anbaugerät (4) eine Schwadvorrichtung und/oder Mähwerkvorrichtung ist.

11. Landwirtschaftliches Fahrzeuggespann nach einem der vorhergehenden Ansprüche,
**dadurch gekennzeichnet,**
**dass** die Einstellvorrichtung (6) dazu vorgesehen und eingerichtet ist, bei der Anpassung der ungeraden Abschnitte (12) der Fahrspuren (8, 9, 10) zusätzlich messtechnisch erfasste Feldgrenzen des landwirtschaftlichen Feld (2) einzubeziehen.

12. Landwirtschaftliches Fahrzeuggespann nach einem der vorhergehenden Ansprüche,
**dadurch gekennzeichnet,**
**dass** die Einstellvorrichtung (6) dazu vorgesehen und eingerichtet ist, bei der Anpassung der ungeraden Abschnitte (12) der Fahrspuren (8, 9, 10) zusätzlich eine messtechnisch erfasste Konturspur von einem Starpunkt (35) bis zu einem Endpunkt (36) des landwirtschaftlichen Feldes (2) einzubeziehen.

13. Landwirtschaftliches Fahrzeuggespann nach einem der vorhergehenden Ansprüche,
**dadurch gekennzeichnet,**
**dass** die Einstellvorrichtung (6) dazu vorgesehen und eingerichtet ist, die Anpassung der ungeraden Abschnitte (12) der Fahrspuren (8, 9, 10) zeitlich vorschauend vorzunehmen.

14. Einstellungstechnische Verwendung von in einem computerlesbaren Datenspeicher hinterlegten Informationen bezüglich automatisch einstellbaren Arbeitsbreiten eines Anbaugerätes (4), um für einen Traktor (3), insbesondere für einen Traktor (3) des landwirtschaftliches Fahrzeuggespanns (1) nach einem der vorhergehenden Ansprüche, der entlang ungerader Abschnitte (12) von Fahrspuren (8, 9, 10) fahren wird, zeitlich vorschauend diese ungeraden Abschnitte (12) derart anzupassen, dass das landwirtschaftliche Feld (2) vollständig bearbeitet wird.

15. Einstellungstechnische Verwendung nach Anspruch 14,
**dadurch gekennzeichnet,**
**dass** die Informationen messtechnische erfasste und einstellungstechnisch relevante Informationen für eine Einstellvorrichtung (6) des Traktors (3) ausbilden.

## Claims

1. Agricultural vehicle-trailer combination (1) for agricultural use in an agricultural field (2),
- having a tractor (3) and at least one attachment (4) which is coupled to said tractor (3) and the working width (5) of which is adjustable,
- having an adjustment device (6) in the tractor (3), wherein the agricultural vehicle-trailer combination (1) is provided and configured to metrologically record a direction of travel angle (11) between the tractor (3) and the attachment (4) and to automatically adjust the working width (5) of the attachment (4) in accordance with said recorded direction of travel angle (11), **characterized**
- **in that** the adjustment device (6) is provided and configured to adjust the tractor (3) depending on satellite-based position information (7) in such a way that the tractor (3) travels along several lanes (8, 9, 10) within the agricultural field (2) during agricultural use,
- wherein the adjustment device (6) is provided and configured to adapt non-rectilinear portions (12) of the lanes (8, 9, 10) in accordance with the automatic adjustment of the working width (5) of the attachment (4) in such a way that, while the tractor (3) travels along said adapted non-rectilinear portions (12) of the lanes (8, 9, 10), the attachment (4) fully processes the agricultural field (2) despite the automatic adjustment of the working width (5).

2. Agricultural vehicle-trailer combination according to Claim 1,
**characterized**
- **in that** the vehicle-trailer combination (1) has a sensor device for metrologically recording the direction of travel angle (11), and
- **in that** the attachment (4) is provided and configured to automatically adjust the working width (5) in accordance with the recorded direction of travel angle (11).

3. Agricultural vehicle-trailer combination according to either of the preceding claims,
**characterized**
**in that** the adjustment device (6) is provided and configured to adapt the lanes (8, 9, 10) in such a way that rectilinear portions (13, 14) of the lanes (8, 9, 10) have a spacing (15, 16) which is greater than a spacing (17) of the non-rectilinear portions (12) of the lanes (8, 9, 10).

4. Agricultural vehicle-trailer combination according to one of the preceding claims,
**characterized**
**in that** the agricultural vehicle-trailer combination (1) is provided and configured to reduce the working width (5) of the coupled attachment (4) in non-rectilinear portions (12) of the lanes (8, 9, 10) in accordance with the recorded direction of travel angle (11).

5. Agricultural vehicle-trailer combination according to one of the preceding claims,
**characterized**
**in that** the agricultural vehicle-trailer combination (1) is provided and configured to maximize the working width (5) of the coupled attachment (4) in rectilinear portions (13, 14) of the lanes (8, 9, 10) in accordance with the recorded direction of travel angle (11).

6. Agricultural vehicle-trailer combination according to one of the preceding claims,
**characterized**
- **in that** the attachment (4) has a plurality of attachment parts (20, 21, 22, 23),
- wherein at least one attachment part (20) is arranged displaceably by means of an actuator (18) on an attachment frame (19) of the attachment (4) for adjusting the working width (5).

7. Agricultural vehicle-trailer combination according to one of the preceding claims,
**characterized**
- **in that** the attachment (4) has a plurality of attachment parts (20, 21, 22, 23),
- wherein, for the adjustment of the working width (5) of the attachment (4) during travel along the non-rectilinear portion (12) of the lane (8, 9, 10), only one attachment part (20) of the attachment (4) is displaced.

8. Agricultural vehicle-trailer combination according to one of the preceding claims,
**characterized**
**in that** a plurality of attachments (4) are coupled to the tractor (3).

9. Agricultural vehicle-trailer combination according to one of the preceding claims,
**characterized**
- **in that** the attachment (4) is designed as a front-mounted attachment (4), and/or
- **in that** the attachment (4) is designed as a rear-mounted attachment (4).

10. Agricultural vehicle-trailer combination according to one of the preceding claims,
**characterized**
**in that** the attachment (4) is a swath-forming device and/or mower device.

11. Agricultural vehicle-trailer combination according to one of the preceding claims,
**characterized**
**in that** the adjustment device (6) is provided and configured to additionally include metrologically recorded field boundaries of the agricultural field (2) in the adaptation of the non-rectilinear portions (12) of the lanes (8, 9, 10).

12. Agricultural vehicle-trailer combination according to one of the preceding claims,
**characterized**
**in that** the adjustment device (6) is provided and configured to additionally include a metrologically recorded contour track from a starting point (35) to an end point (36) of the agricultural field (2) in the adaptation of the non-rectilinear portions (12) of the lanes (8, 9, 10).

13. Agricultural vehicle-trailer combination according to one of the preceding claims,
**characterized**
**in that** the adjustment device (6) is provided and configured to adapt the non-rectilinear portions (12) of the lanes (8, 9, 10) in advance.

14. Use, in terms of adjustment, of information stored in a computer-readable data memory with regard to automatically adjustable working widths of an attachment (4) in order for a tractor (3), in particular for a tractor (3) of the agricultural vehicle-trailer combination (1) according to one of the preceding claims, which will travel along non-rectilinear portions (12) of lanes (8, 9, 10), to adapt said non-rectilinear portions (12) in advance in such a way that the agricultural field (2) is fully processed.

15. Use, in terms of adjustment, according to Claim 14,
**characterized**
**in that** the information forms metrologically recorded and adjustment-relevant information for an adjustment device (6) of the tractor (3).

## Revendications

1. Attelage de véhicule agricole (1) destiné à un usage agricole sur un champ agricole (2),
- comprenant un tracteur (3) et au moins un outil porté (4) accouplé à ce tracteur (3), dont la largeur de travail (5) est réglable,
- comprenant un dispositif de réglage (6) dans le tracteur (3), l'attelage de véhicule agricole (1) étant prévu et conçu pour détecter de manière métrologique un angle de direction de déplacement (11) entre le tracteur (3) et l'outil porté (4) et pour régler automatiquement la largeur de travail (5) de l'outil porté (4) en fonction de cet angle de direction de déplacement (11) détecté, **caractérisé en ce**
- **que** le dispositif de réglage (6) est prévu et conçu pour régler le tracteur (3) en fonction d'informations de position (7) fournies par satellite de telle sorte que le tracteur (3) se déplace le long de plusieurs bandes de circulation (8, 9, 10) à l'intérieur du champ agricole (2) pendant l'usage agricole,
- le dispositif de réglage (6) étant prévu et conçu pour adapter les portions non droites (12) des bandes de circulation (8, 9, 10) en fonction du réglage automatique de la largeur de travail (5) de l'outil porté (4), de telle sorte que l'outil porté (4) traite complètement le champ agricole (2) pendant le déplacement du tracteur (3) le long de ces portions non droites (12) adaptées des bandes de circulation (8, 9, 10) malgré le réglage automatique de la largeur de travail (5).

2. Attelage de véhicule agricole selon la revendication 1,
**caractérisé en ce**
- **que** l'attelage de véhicule (1) possède un dispositif capteur destiné à détecter de manière métrologique l'angle de direction de déplacement (11), et
- **que** l'outil porté (4) est prévu et conçu pour régler automatiquement la largeur de travail (5) en fonction de l'angle de direction de déplacement (11) détecté.

3. Attelage de véhicule agricole selon l'une des revendications précédentes,
**caractérisé en ce**
**que** le dispositif de réglage (6) est prévu et conçu pour adapter les bandes de circulation (8, 9, 10) de telle sorte que les portions droites (13, 14) des bandes de circulation (8, 9, 10) présentent un espacement (15, 16) qui est supérieur à un espacement (17) des portions non droites (12) des bandes de circulation (8, 9, 10).

4. Attelage de véhicule agricole selon l'une des revendications précédentes,
**caractérisé en ce**
**que** l'attelage de véhicule agricole (1) est prévu et conçu pour réduire la largeur de travail (5) de l'outil porté (4) accouplé dans les portions non droites (12) des bandes de circulation (8, 9, 10) en fonction de l'angle de direction de déplacement (11) détecté.

5. Attelage de véhicule agricole selon l'une des revendications précédentes,
**caractérisé en ce**
**que** l'attelage de véhicule agricole (1) est prévu et conçu pour maximiser la largeur de travail (5) de l'outil porté (4) accouplé dans les portions droites (13, 14) des bandes de circulation (8, 9, 10) en fonction de l'angle de direction de déplacement (11) détecté.

6. Attelage de véhicule agricole selon l'une des revendications précédentes,
**caractérisé en ce**
- **que** l'outil porté (4) possède plusieurs parties d'outil porté (20, 21, 22, 23),
- au moins une partie d'outil porté (20) étant montée coulissante au moyen d'un actionneur (18) sur un bâti d'outil porté (19) de l'outil porté (4) pour le réglage de la largeur de travail (5).

7. Attelage de véhicule agricole selon l'une des revendications précédentes,
**caractérisé en ce**
- **que** l'outil porté (4) possède plusieurs parties d'outil porté (20, 21, 22, 23),
- pour le réglage de la largeur de travail (5) de l'outil porté (4), une seule partie d'outil porté (20) de l'outil porté (4) étant coulissée pendant le déplacement le long de la portion non droite (12) de la bande de circulation (8, 9, 10).

8. Attelage de véhicule agricole selon l'une des revendications précédentes,
caractérisé en ce
plusieurs outils portés (4) étant accouplés au tracteur (3).

9. Attelage de véhicule agricole selon l'une des revendications précédentes,
**caractérisé en ce**
- **que** l'outil porté (4) est réalisé sous la forme d'un outil porté (4) avant, et/ou
- **que** l'outil porté (4) est réalisé sous la forme d'un outil porté (4) arrière.

10. Attelage de véhicule agricole selon l'une des revendications précédentes,
**caractérisé en ce**
**que** l'outil porté (4) est un dispositif d'andainage et/ou un dispositif de faucheuse.

11. Attelage de véhicule agricole selon l'une des revendications précédentes,
**caractérisé en ce**
**que** le dispositif de réglage (6) est prévu et conçu pour inclure en plus, lors de l'adaptation des portions non droites (12) des bandes de circulation (8, 9, 10), les limites de champ du champ agricole (2) capturées de manière métrologique.

12. Attelage de véhicule agricole selon l'une des revendications précédentes,
**caractérisé en ce**
**que** le dispositif de réglage (6) est prévu et conçu pour inclure en plus, lors de l'adaptation des portions non droites (12) des bandes de circulation (8, 9, 10), une bande de contour capturée de manière métrologique d'un point de départ (35) à un point d'arrivée (36) du champ agricole (2).

13. Attelage de véhicule agricole selon l'une des revendications précédentes,
**caractérisé en ce**
**que** le dispositif de réglage (6) est prévu et conçu pour effectuer l'adaptation des portions non droites (12) des bandes de circulation (8, 9, 10) de manière anticipée.

14. Utilisation en technique de réglage d'informations stockées dans une mémoire de données lisible par ordinateur concernant des largeurs de travail réglables automatiquement d'un outil porté (4), afin de permettre à un tracteur (3), en particulier un tracteur (3) de l'attelage de véhicule agricole (1) selon l'une des revendications précédentes, qui se déplacera le long de portions non droites (12) de bandes de circulation (8, 9, 10), d'adapter de manière anticipée ces portions non droites (12) de telle sorte que le champ agricole (2) soit entièrement traité.

15. Utilisation en technique de réglage selon la revendication 14,
**caractérisé en ce**
**que** les informations forment des informations capturées de manière métrologique et pertinentes en technique de réglage pour un dispositif de réglage (6) du tracteur (3).
